# EUROPEAN PATENT APPLICATION

(11) **EP 2 431 006 A1**
(43) Date of publication of application: **21.03.2012**
(21) Application number: 10176998.2
(22) Date of filing: 16.09.2010
(51) Int. Cl.: A61C 13/09, A61C 13/083, A61C 13/00

(54) **A method of making a dental restoration**

(71) Applicant: 3M Innovative Properties Company, Saint Paul, MN 55133-3427 (US)
(72) Inventor: The designation of the inventor has not yet been filed
(74) Representative: Hohmann, Arno

(57) **Abstract**

A method of making a dental restoration comprises the steps of making a framework or framework precursor from a ceramic material, making a facing precursor from a glass ceramic material, providing a dental restoration precursor from the framework precursor and the facing precursor, and removing part of the dental restoration precursor to form the dental restoration. The invention may help maximizing the precision of a dental restoration in an automated manufacturing process of the dental restoration.

## Description

### Field of the Invention

The invention relates to a method of making a dental restoration, and in particular to a method comprising steps of making a framework precursor and a facing precursor, providing a dental restoration precursor from the framework and facing precursors, and finishing the dental restoration precursor to form the dental restoration.

### Background Art

In the field of dentistry, restoration of a patient's tooth or teeth generally includes the replacement of the natural tooth substance by an artificial substance. For larger restorations, pre-finished dental restorations or prostheses are commonly used to replace the tooth or teeth or at least part of those.

Dental restorations or prostheses are often made as a two or more component configuration, with the individual components providing different characteristics for the restoration. For example, a framework may provide excellent structural support, and a facing may provide excellent aesthetics. The framework is typically a supporting structure for the dental restoration that provides mechanical stability and usually comprises an interface by which the restoration can be affixed to a prepared tooth of a patient or to a dental abutment that may be present in a patient's mouth. The facing typically provides for pleasing aesthetic characteristics that gives the restoration the shape and appearance of natural teeth. In addition, both the framework and the facing are shaped to fit well with the adjacent teeth in a patient's mouth.

In the recent years ceramic materials have been widely used for making high-quality dental restorations because of their good physical, aesthetic and biological properties. These restorations are often manufactured by an automated process, which typically includes:
- capturing data representing the shape of a patient's teeth, for example by scanning a plaster model of the patient's teeth or alternatively by scanning the actual teeth in the patient's mouth;
- designing the shape of a framework based on the captured data using software, such as computer-aided design (CAD) software;
- manufacturing the framework to correspond to the designed shape, for example, by an automated Computer Numerical Controlled (CNC) machine; and
- adding a facing to the framework to provide the dental restoration.

WO 2007/060142 discloses for example a method for producing a dental prosthesis with a framework and a veneer. The method comprises the steps of defining three-dimensional geometrical data of the veneer, providing the framework, producing a model of the veneer, forming a female impression of the veneer, and filling of the female impression with veneer material for producing the veneered dental prosthesis.

WO 2009/052082 discloses a method for making a dental restoration at a certain tooth color shade. The method comprises joining a veneer precursor, a framework and a compensation material to form the dental restoration. The tooth color shade is selected from among a continuous range of tooth color shades, but individual components of the dental restoration may be selected from discrete color shades.

WO 2006/120255 discloses a method of producing a framework element, on the one hand, and a fitting veneer shell, on the other hand, and subsequently joining them to each other to provide a dental prosthetic item. The method involves preparing a digital prosthetic item with an outer contour which matches the preparation position and a connection outline which matches the preparation position. The digital prosthetic item is divided into structural parts by automatic dismantling according to given construction algorithms and 3D data records are thus produced for making the first and further structural parts. The first and second structural parts are assembled to form the prosthetic item.

Although a variety of methods of making a dental restoration have been proposed it is still difficult to provide a dental restoration that provides both the necessary structural durability and good aesthetics. Further it is generally desired to make a dental restoration at minimized costs, but at maximized precision, in particular with regard to the shape, durability, and the color of the dental restoration.

### Summary of the Invention

The invention relates to a method of making a dental restoration. The method comprises the steps of:
- providing a dimensionally predetermined framework or framework precursor;
- providing a dimensionally predetermined facing precursor;
- providing a dental restoration precursor from the framework/framework precursor and the facing precursor; and
- removing part of the dental restoration precursor to form the dental restoration.

The invention may be advantageous in that it preferably allows manufacturing of a dental restoration under standardized manufacturing conditions and from a relatively durable and aesthetically pleasant material, like ceramic, glass or glass ceramic, in contrast to having a dental technician manually manufacture the restoration including manually layering a facing. Furthermore, with the invention, existing machining devices (like milling, grinding or rapid prototype machines) can be used not only to manufacture the framework but also to make the facing. This substantially reduces the time needed to prepare a dental restoration. The invention may further allow minimizing tolerances of the dental restoration. In particular tolerances caused by heat treatments (for example firing or sintering) required to manufacture the dental restoration or parts of it may be substantially entirely eliminated due to machining the dental restoration after any heat treatments. Although prior art methods may be available for machining dental restorations to the final shape the present invention preferably additionally provides for an individualized inner structure (one which is specifically adapted to a certain clinical situation in a patient's mouth, for example with regard to the shape of the framework, the shape of the facing and the colors used for the framework and/or the facing). Further the invention preferably provides for machining at minimized machining time and costs because the dental restoration precursor may have a so-called near net shape, meaning that extra material which is to be removed from the dental restoration precursor to form the dental restoration may be minimized. The invention is further preferably advantageous for the making of a dental restoration for replacing a plurality of teeth. Such a dental restoration is typically configured to span multiple teeth in a patient's mouth and thus is typically relatively large in size. The invention preferably allows providing such a dental restoration at relatively high accuracy because deformations from heat treatments may be minimized by the method of the invention. The invention may further allow for making a dental restoration in which the facing has a minimized thickness in at least one dimension.

For the purpose of this specification the terms "framework precursor", "facing precursor", and "dental restoration precursor" refer to a pre-stage of a final configuration of a framework, a facing, and a dental restoration, respectively. The framework precursor, the facing precursor, and the dental restoration precursor may therefore require further processing to reach the final configuration. Accordingly for the purpose of this specification the terms "framework", "facing", and "dental restoration" (without the addition of "precursor") generally refer to the final configuration. For example the framework, the facing and the dental restoration may exhibit properties required for implantation in a patient's mouth. The framework, the facing, and the dental restoration may for example have the shape required for implantation in a patient's mouth. Further the final configuration preferably has the appropriate color to fit with other teeth in the patient's mouth, and the desired material properties required to form a durable dental restoration. Although it is referred to as "final configuration" it understood that alterations are still possible, for example a final configuration may be slightly adapted in shape, and/or may be polished, and/or glazed, by a dentist implanting the restoration in a patient's mouth.

The framework precursor, the facing precursor and/or the dental restoration precursor may be comprised of a material in a green stage or a pre-sintered stage. Further the framework precursor, the facing precursor or the dental restoration precursor may be comprised of a material in its final stage, for example in a sintered stage, but the shape of the framework precursor, the facing precursor or the dental restoration precursor may be at a pre-stage, for example may be enlarged relative to the final configuration.

For the purpose of this specification a material in the green stage is considered to be formed of material particles that are adhered with one another, for example by a polymeric binder, whereas the pre-sintered material preferably comprises particles which are fused. Fusing of the particles may for example be achieved by sintering (in particular heating) of the particles in a bulk. Both types of connections between the particles typically result in a formation of a generally coherent body of open-celled or open porous material. This is due to the particles may adjoin at certain areas but leave spaces at other areas between one another, like it is provided by a bulk of adjoining generally ball shaped particles for example. However the pre-sintered material typically has a higher strength than the green material because the particles may adjoin each other at least partially by cohesion (fusion) whereas the particles of a pre-sintered material may predominantly adjoin each other by adhesion. This may be advantageous for machining, for example milling or grinding, because the pre-sintered material (relative to the green material) may be suitable to withstand a relatively fixed clamping in a machine without breaking, and the occurrence of chippings of edges caused by machining may be minimized. The green or pre-sintered material may be provided by a rapid prototyping process in which a body is built up by successively adjoining particles (for example provided as a powder) in several portions, for example layer by layer. Further the green or pre-sintered material may be obtained from pressing a bulk of particles into shape. In this way a precursor of the framework, the facing or the dental restoration may be provided, or a blank may be provided which may be shaped by removal of material (for example by milling or grinding) to obtain the framework precursor, the facing precursor, or the dental restoration precursor. Further a green material may be provided by molding or mold pressing. For molding a precursor of a green material the particles may be provided in the form of a slurry from the particles and a liquid, with the slurry forming a flowable mass. After molding of the slurry in a cast at least part of the liquid may be removed (for example by firing) so that the particles left behind in the cast form a coherent body.

For the purpose of the specification a material in the sintered stage is considered to be a generally solid or generally dense material (for example having a generally non-open-porous or open-celled structure). Such a material may for example be generally obtained by sintering an open-porous material until the spaces between the particles are substantially eliminated. Further a similar material may be provided by casting a molten material.

In one embodiment the framework or framework precursor is made of ceramic material. The framework or framework precursor may further be made of metal. In a further embodiment the facing or facing precursor is made of glass or a glass ceramic material. The facing or facing precursor may further be made of a polymer material, for example a dental composite material.

In one embodiment the ceramic material is selected to provide a relatively good mechanical stability. High-strength oxides of the elements of the main groups II, III and IV and the subgroups III and IV as well as their mixtures, in particular aluminum oxide, zirconium oxide, both partly and also fully stabilized, magnesium oxide, titanium oxide and mixtures of aluminum oxide, zirconium oxide, magnesium oxide and titanium oxide. Preferably the ceramic material is based on zirconium oxide. In particular the ceramic material may comprise between 90 and 99 % by weight zirconium oxide, and preferably 91 to 97.25 % by weight zirconium oxide. Preferably it is alloyed with 1 to 10 weight % of an oxide (particularly Yttria, Y₂O₃) stabilizing the tetragonal phase: 4-7 weight% Yttria. The ceramic material may further comprise 0 - 1 % by weight aluminum oxide. The ceramic material may also be based on aluminum oxide. Further the ceramic material of the frame may comprise 0 - 10% by weight of at least one of hafnium oxide, yttrium oxide and oxides from gallium, germanium, and indium. The ceramic material of the frame may also comprise 0.0005 to 1.5% by weight of coloring additives, selected from the group consisting of the oxides Fe₂O₃, Er₂O₃, Pr₆O₁₁ and/or MnO₂. The ceramic material is preferably selected to be compatible for use in human bodies.

In another embodiment the glass material or glass ceramic material is selected to be compatible for use in human bodies. The glass material or glass ceramic material is preferably selected to provide good aesthetic appearance for the dental restoration, in particular in a combination with the framework. Typical glass materials or glass ceramic materials may comprise 60 % to 70% by weight of silica, 9% to 13% by weight of alumina, 5% to 10% by weight of potassium-oxide, 9% to 13% by weight of sodium-oxide, 0% to 1% by weight of lithium-oxide, 2% to 5% by weight of calcia, 1% to 2% by weight of barium-oxide, 0% to 1% by weight of zirconium oxide and 0% to 1% cerium-oxide or cerium-fluoride. Glass materials are generally amorphous whereas glass ceramic materials exhibit besides the vitreous glassy phase also a crystalline phase (detected by X-ray diffraction). Preferably glass ceramic materials based for example on the crystalline phases of leucite or of lithium disilicate are used.

For better legibility a reference to "glass ceramic" shall in the following generally include "glass" as an alternative although "glass" may not be explicitly mentioned.

In one embodiment the method comprises the step of providing data defining an outer shape of the dental restoration.

For the purpose of this specification the term "outer shape" generally refers to the shape of a surface of the dental restoration, the framework, or the facing thereof, which is configured to face away from the tooth or teeth to be restored by the dental restoration in a situation where the dental restoration is placed in a patient's mouth. Further for the purpose of this specification the term "inner shape" generally refers to a shape of a surface which is configured to face toward the tooth or teeth to be restored by the dental restoration in the situation where the dental restoration is placed in a patient's mouth. For example the dental restoration may have an inner shape which is shaped to substantially match a shape of a stump of a natural tooth to be restored (eventually accounting for a bonding layer arranged between), and an outer shape which is shaped to fit in occlusal contact with an opposing tooth or with opposing teeth. The facing may have an outer shape which corresponds to the outer shape of the dental restoration, and the framework may have an inner shape which corresponds to the inner shape of the dental restoration. Further the framework may comprise an outer shape which faces away from the inner shape of the framework, and the facing may comprise an inner shape which faces away from the outer shape of the facing. The outer shape the framework and the inner shape of the facing may be configured to mate with one another, for example may form corresponding positive and negative shapes which match with one another, or may be proportionally scaled positive and negative shapes to account for a connection layer connecting the framework and the facing. Other components, for example precursors of the dental restoration, the framework or the facing, may have inner and outer shapes in accordance to these definitions. Further a natural tooth or teeth to be restored, or a dental abutment for receiving the dental restoration typically has an outer shape for mating with the dental restoration.

Any inner or outer shape may be defined in the form of data, for example in the form of a digital surface representation. The data may comprise coordinates which are suitable to mathematically describe a three-dimensional surface. Further such data preferably have a data format suitable for being processed in a CAD (Computer Aided Design) system, for example a dental CAD system.

In one embodiment the framework or framework precursor may be dimensionally predetermined by providing data defining an inner and outer shape of the framework or framework precursor, respectively. Preferably such data defining the inner and outer shape of the framework or framework precursor are used to manufacture the framework or framework precursor, respectively.

In a further embodiment the facing precursor may be dimensionally predetermined by providing data defining an inner and outer shape of the facing precursor. Preferably such data defining the inner and outer shape of the facing precursor are used to manufacture the facing precursor.

In still a further embodiment the method further comprises the step of providing data defining an outer shape of the dental restoration precursor. Preferably the outer shape of the dental restoration precursor is oversized relative to the outer shape of the dental restoration. The outer shapes of the dental restoration and the dental restoration precursor may each correspond to a three-dimensional shape, and the shape of the dental restoration precursor may be oversized in the three dimensions relative to the shape of dental restoration. For example outer shape of the dental restoration precursor may be proportionally enlarged in three dimensions relative to the outer shape of the dental restoration. Thus the dental restoration precursor may comprise extra material which may be removed to form the dental restoration. Therefore tolerances of the dental restoration may be minimized. This is because distortions and/or inaccuracies which may occur during heat treatments of the restoration or components of it may be removed with removing the extra material.

In one embodiment the method further comprises the step of capturing the clinical situation in a patient's mouth. The clinical situation may comprise at least one of the shape of one or more natural teeth in the patient's mouth, the shape of at least part of the patient's jaw, the shape of dental restorations already present in a patient's mouth, and the shape of one or more dental implants and/or dental abutments. The clinical situation may for example be captured by optically scanning. Such an optical scanning may be conducted directly in a patient's mouth, or at a model (for example an elastomeric or a plaster model) of the clinical situation obtained from a dental impression, for example.

The captured clinical situation may then, in the form of data, be provided to a CAD system. The clinical situation may be used to design the outer shape of the dental restoration. For example the outer shape of the dental restoration may be designed such that the dental restoration fits pleasantly with adjacent and opposing teeth in the patient's mouth. The CAD system may further be used to design the framework, the facing, as well as precursors thereof.

In one embodiment the step of providing the framework or framework precursor comprises the steps of:
- providing ceramic particles, and
- adjoining the ceramic particles such that they form an open-celled ceramic body.

In a further embodiment the step of providing facing precursor comprises the steps of:
- providing glass ceramic particles, and
- adjoining or glass ceramic particles such that they form an open-celled glass ceramic body.

As mentioned glass particles may be used as an alternative to glass ceramic particles.

The step of adjoining the glass ceramic and/or the ceramic particles may be performed by use of a rapid prototyping machine. For example the particles may be deposited in multiple layers that are connected by a binder. Such a machine is for example available under the designation ZPrinter 310 from Z Corporation, Burlington, USA. The step of adjoining the glass ceramic and/or the ceramic particles may further be performed by compression of a bulk of ceramic particles to form a coherent open-celled body, for example by use of isostatic and/or uniaxial pressing.

The glass particles, the glass ceramic particles and/or ceramic particles may be provided in the form of a powder for example. The average size of such particles may be within a range of about 10 µm to about 60 µm, and preferably about 30 µm. The distribution of the particle size may be for example:
- 10% of the particles smaller than 3 µm;
- 50% of the particles smaller than 26 µm; and
- 90% of the particles smaller than 71 µm.

In a further embodiment the step of providing the framework or framework precursor comprises the step of shaping the ceramic body by removing a portion of the ceramic body.

In still a further embodiment the step of providing the facing precursor further comprises the step of shaping the glass ceramic body by removing a portion of the ceramic body.

The step of removing a portion of the ceramic or glass-ceramic body may for example comprise the step of milling or grinding.

In a further embodiment the step of providing the framework precursor comprises the step of sintering the open-celled ceramic body toward the density of the ceramic particles. For example the open-celled ceramic body may as a whole have a lower density than the density of the ceramic particles because the cells may form voids in that body, and as the material is sintered the density approaches the density of the ceramic particles due to the amount of voids decreasing. Further sintering typically causes the body of open-celled material to shrink substantially proportionally.

In one embodiment the step of providing the dental restoration precursor comprises the step of sintering the open-celled glass ceramic body toward the density of the glass ceramic particles. In this embodiment the framework or framework precursor may be provided at a sintered stage and the facing precursor may be provided at a green or pre-sintered stage. The framework precursor and the facing precursor may be combined, for example mated with one another, and that combination may be sintered for sintering the facing precursor and fusing both components with one another. The so formed combination preferably forms the dental restoration precursor.

Sintering of the facing precursor comprised of an open-celled material in an assembly with the framework precursor may provide the advantage that essentially no air is trapped between both components during sintering. This is because air can escape through the open-celled material of the facing precursor over at least part of the time of sintering. Consequently, such a method may have the advantage of providing a good bond between the final facing and the framework because air, that could keep the mating components at least partially separate, is minimized. Furthermore, because of the essential absence of air in the structure of the dental restoration, the strength and durability of the dental restoration may be relatively high.

In one embodiment the facing precursor may be build up directly on the framework or framework precursor from glass ceramic particles or from a glass ceramic melt. For example glass ceramic particles may be deposited on the framework precursor to build up the facing precursor, or the framework precursor may be dipped in or overmolded by a melt of ceramic material. Depositing, dipping or overmolding may be repeated and/or combined to build up several layers of glass ceramic material to form the facing precursor.

Depositing of ceramic particles may be achieved by wetting the framework precursor and dipping the framework precursor in a bulk of glass ceramic particles. However the skilled person will recognize other possibilities to deposit glass ceramic particles.

In a further embodiment the step of providing the facing precursor comprises the step of sintering the open-celled glass ceramic body toward the density of the glass ceramic particles. In this embodiment both the framework/framework precursor and the facing precursor may be provided at a sintered stage. The framework/framework precursor and the facing precursor may be combined, for example mated with one another, and that combination may be sintered for fusing both components with one another. The so formed combination may also form the dental restoration precursor.

In one embodiment the method comprises the step of providing the framework/framework precursor comprises the step of the framework/framework precursor with an outer shape independently from providing the dental restoration with a desired color. Further the method may comprise the step of providing the facing precursor with an outer shape independently from providing the dental restoration with a desired color. Thus, although the desired tooth color may be nevertheless achieved, the mechanical stability of the dental restoration may be maximized.

In one embodiment the step of providing the dental restoration precursor comprises the step of joining the framework/framework precursor and the facing precursor. The step of joining may comprise mating the framework/framework precursor and the facing precursor directly or indirectly with one another. The indirect mating may for example comprise the step of providing a connection layer between the framework precursor and the facing precursor. Such a connection layer may be provided in the form of a slurry of ceramic or glass or glass ceramic particles and water. The water preferably evaporates from sintering and the particles of the slurry preferably fuse with one another and with the framework/framework precursor and the facing precursor during sintering. The use of the slurry may be advantageous to minimize voids between the framework precursor and the facing precursor from tolerances of the framework precursor and the facing precursor.

In a further embodiment the method comprises the steps of:
- providing the dental restoration precursor with a holder portion; and
- using the holder portion to position the dental restoration precursor in a machine for making the dental restoration from the dental restoration precursor. A holder portion may facilitate clamping of the framework or dental restoration or precursor thereof. The holder portion may be removed prior to placing the dental restoration in a patient's mouth. A machine for making the dental restoration may for example be a milling and/or grinding machine. Therefore the step of removing part of the dental restoration precursor may comprise at least one of milling and grinding.

In one embodiment the method comprises the step of providing data defining the inner shape of the dental restoration. The step of removing part of the dental restoration precursor may comprise the step of first providing the dental restoration precursor with either the outer or the inner shape and subsequently with the inner or the outer shape, respectively. Thereby the shape provided first is preferably used as a geometric reference for providing the shape provided subsequently. Therefore the precision of the positional relationship between the inner and outer shapes may be maximized. As an advantage the dental restoration may fit well in a patient's mouth and efforts for adaptations by a dentist implanting the dental restoration may be minimized.

In one embodiment the method comprises the step of using the holder portion as reference for shaping at least one of the inner surface and the outer surface of the dental restoration.

In one embodiment the method comprises the steps of providing the dental restoration precursor with the inner shape first, and placing the so modified restoration precursor with the inner shape on a model representing a receiving structure for the dental restoration. The receiving structure may represent one or more natural teeth and/or one or more dental abutments for example. The model representing the receiving structure may for example be formed on a plaster or resin model of a patient's teeth. Thus the outer shape of the dental restoration may be precisely shaped according to the actual geometric situation in a patient's mouth.

In one embodiment the method further comprises the steps of:
- capturing at least part of one of the inner or outer shape which is provided first to provide a three-dimensional computer representation of that shape; and
- digitally aligning the respective other of the inner or outer shape based on the three-dimensional computer representation.

Therefore the actual inner or outer shape of the dental restoration may be used to provide the respective other shape of the dental restoration which may help maximizing the precision of the dental restoration.

In one example the method may comprise the steps of:
(A) providing the dimensionally predetermined framework or framework precursor which may comprise the steps of:
   (i) providing ceramic particles;
   (ii) adjoining the ceramic particles such that they form an open-celled ceramic body;
   (iii) shaping the ceramic body by removing a portion of the ceramic body; and
   (iv) sintering the shaped ceramic body toward the density of the ceramic particles;
(B) providing the dimensionally predetermined facing precursor which comprises the steps of:
   (v) providing glass ceramic particles;
   (vii) adjoining the glass ceramic particles such that they form an open-celled glass ceramic body; and
   (viii) shaping the glass ceramic body by removing a portion of the glass ceramic body;
(C) providing the dental restoration precursor from the framework/framework precursor and the facing precursor which comprises the steps of:
   (ix) joining the framework/framework precursor and the facing precursor with providing a connection layer between the framework/framework precursor and the facing precursor; and
   (x) sintering the open-celled glass ceramic body toward the density of the glass ceramic particles;
(D) and removing part of the dental restoration precursor to form the dental restoration.

Either or both steps (iii) and (viii) may in another example be optional, for example in case a build up process (for example using a rapid prototype machine) is used. Further the step (x) may be performed within the step (B) as an alternative to within the step (C). Further the steps (i) to (iv) may be replaced by a step of providing a framework/framework precursor made of metal. The steps (v) to (viii) may be replaced by the step of molding the facing precursor from a glass ceramic material or a polymer based composite material, or alternatively, the steps (v) to (viii) may be omitted and instead the step of molding the facing precursor from a glass ceramic material or a polymer based composite material may be performed under the step (C), for example in case the framework/framework precursor is overmolded. Further the step (ix) may be replaced by the step of joining the framework/framework precursor and the facing precursor without providing a connection layer between the framework/framework precursor and the facing precursor.

In another embodiment the method comprises the step of providing the facing precursor and/or the framework precursor with a color. The color is preferably associated with a tooth color of a patient. The tooth color of a patient may be captured by a color measuring device (for example a Vita Easy Shape or Degudent Shade pilot system), or may be selected by a dentist with the aid of sample colors. More than one tooth color may be determined for one patient. For example one or more dentin colors and one or more enamel colors may be determined, and such colors may be provided to form the framework precursor and/or the facing precursor.

In one embodiment the method comprises the steps of building up several layers of a ceramic and/or glass ceramic material, wherein different layers may be provided with different colors. Thus a dental restoration may be formed which relatively precisely resembles a natural tooth.

In a build up method the color layers may be configured according to requirements of an individual patient. Further several colors may be used to form a blank from which the framework precursor and/or the facing precursor may be obtained, for example by removing a portion of the blank. A set of blanks may comprise several differently colored blanks. From such a set of blanks a blank matching the desired tooth color best may be selected to form the dental restoration or a component thereof.

### Brief Description of the Figures

- Fig. 1: is a schematic view of a framework precursor for a dental restoration according to an embodiment of the invention;
- Fig. 2: is a schematic view of a facing precursor for a dental restoration according to an embodiment of the invention;
- Fig. 3: is a schematic view of a facing precursor for a dental restoration according to a further embodiment of the invention;
- Fig. 4: is a schematic view illustrating an assembly of a framework precursor and a facing precursor according to an embodiment of the invention;
- Fig. 5: is a schematic view of an assembly of a framework precursor and a facing precursor according to an embodiment of the invention;
- Fig. 6: is a schematic view of an assembly of a framework precursor and a facing according to an embodiment of the invention; and
- Fig. 7: is a schematic view of the dental restoration formed by an assembly of a framework and a facing according to an embodiment of the invention.

### Detailed Description of the Invention

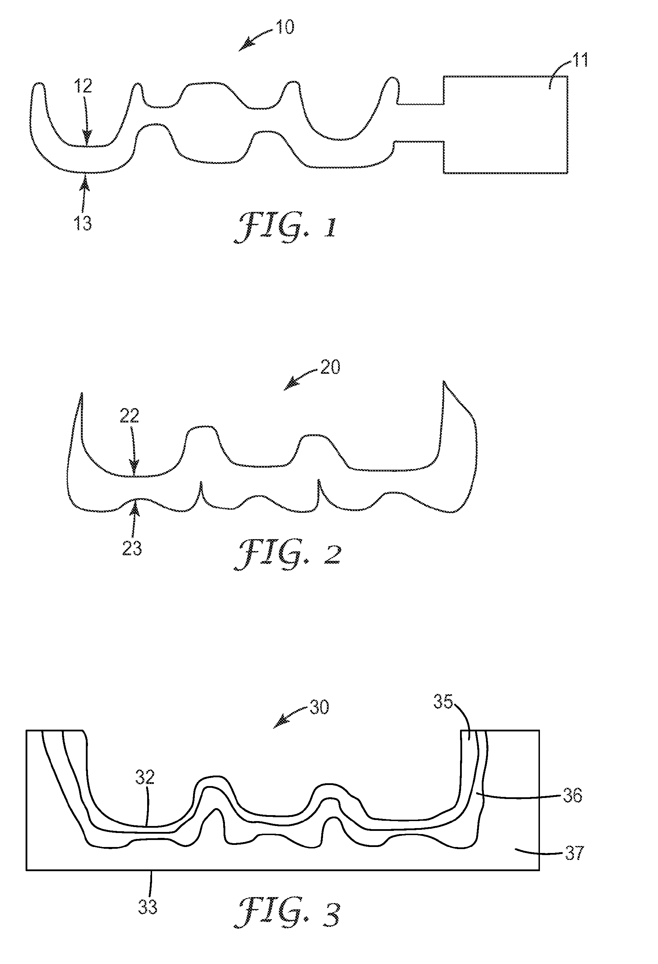

Figs. 1 to 7 illustrate individual steps of the method of making a dental restoration according to the invention. Although the method steps are described in a certain order the skilled person will recognize that certain steps can be arranged in a different order without departing from the invention. The method of the invention generally comprises steps of making a framework of the dental restoration, a facing of the dental restoration, and steps of providing a combination of the framework and the facing to form the dental restoration. The framework, the facing and the dental restoration may within the individual method steps be provided in their final form or as precursors of the final form.

Fig. 1 shows a framework precursor 10 for the dental restoration. The framework precursor 10 has an optional holding portion 11 which preferably allows the framework precursor 10 to be positioned in a machine. In the example the framework precursor 10 is shaped to form part of a dental bridge, however the skilled person will recognize that the framework precursor may be otherwise shaped, for example to form part of a dental crown or any other appropriate type of a dental restoration. The framework precursor 10 has an inner shape 12 and an outer shape 13. The inner shape 12 of the framework precursor 10 may correspond to a preliminary inner shape of the dental restoration. This preliminary inner shape may exhibit excess material which may be removed to establish a final inner shape fitting with a shape of a natural tooth or a dental abutment (not shown) in a patient's mouth. For example the inner shape 12 may be finished in a subsequent step by machining (for example by grinding or milling), and thereby the framework may be formed. The outer shape 13 of the framework precursor 10 may correspond to the final shape as it may be present in the dental restoration, for example when implanted in a patient's mouth.

The framework precursor 10 may be obtained from the steps of providing a bulk of ceramic particles, pre-sintering the bulk of ceramic particles to form a blank, machining the blank to form a framework precursor having an open-celled material structure, and sintering the framework precursor having the open-celled material structure to form the framework precursor having a substantially non-open celled material structure. Therefore the framework precursor may be comprised of a sintered (generally non-open celled material) but with the inner shape being preliminary.

In another example the framework precursor may have an open-celled material structure. In this example the step of sintering may only take place after assembly with a facing precursor. This means that sintering such a framework precursor preferably results in a further framework precursor having substantially the final material structure but still having a preliminary inner shape. The framework precursor 10 may also be obtained from providing a blank of ceramic material, for example a pre-sintered, a densely sintered or a casted ceramic material. Such blank may be machined to form the framework precursor. Further a metal may be used instead of (or in addition to) the ceramic material.

Fig. 2 shows a facing precursor 20 for the dental restoration. In the example the facing precursor 20 is shaped to form part of a dental bridge, however the skilled person will recognize that the facing precursor 20 may be otherwise shaped, for example to form part of a dental crown or any other appropriate type of a dental restoration. The facing precursor 20 has an inner shape 22 and an outer shape 23. The inner shape 22 of the facing precursor 20 may be shaped to fit with the outer shape (number 13 shown in Fig. 1) of the framework precursor. The inner shape 22 of the facing precursor and/or the outer shape of the framework precursor may be shaped to account for a connection layer arranged between the inner shape 22 of the facing precursor and/or the outer shape of the framework precursor. For example the inner shape 22 of the facing precursor and/or the outer shape of the framework precursor may be three-dimensionally proportionally scaled relative to one another.

The facing precursor 20 may be obtained from the steps of providing a bulk of glass ceramic particles, pre-sintering the bulk of glass ceramic particles to form a blank, and machining the blank to form a facing precursor having an open-celled material structure. Therefore the facing precursor may be comprised of an open-celled material and preferably has an outer shape being proportionally oversized relative a preliminary outer shape of the dental restoration. The facing precursor may also be obtained from providing a blank of glass ceramic material, for example a densely sintered or casted glass ceramic material, and machining the blank to form the facing precursor. However preferably the facing precursor is provided with an open-celled material structure and the final sintering is made only after the facing precursor is combined with the framework precursor as further described below. It is noted that for the purpose of this specification including the examples the reference to "glass ceramic" shall encompass "glass" as an alternative.

The outer shape 23 of the facing precursor 20 is preferably configured such that sintering of the facing precursor results in a further facing precursor which has the preliminary outer shape of the dental restoration. The preliminary outer shape preferably exhibits excess material which may be removed to establish the final outer shape of the dental restoration. For example the outer shape 23 of the facing precursor may be three-dimensionally proportionally enlarged relative to the preliminary outer shape of the finished dental restoration. For example the outer shape 23 may be finished by sintering and machining the facing precursor (for example by grinding or milling).

Fig. 3 shows a facing precursor 30 which may generally correspond to the facing precursor shown in Fig. 2 but having a differently shaped outer shape 33. For example the facing precursor 30 may be provided as a blank having a standardized outer shape 33, and which comprises an inner shape 32 which is shaped to fit with the outer shape (number 13 shown in Fig. 1) of the framework precursor. Thus the facing precursor shown in Fig. 2 may have an outer shape which generally conforms to an enlarged the shape of natural teeth whereas the facing precursor 30 shown in Fig. 3 may have an outer shape which generally corresponds to a shape of a blank from which the facing precursor is obtained.

The facing precursor 30 in the example comprises multiple layers 35, 36, 37 which may have different colors. Further such layers may be designed in shape by a CAD system according to an individual geometric situation in a patient's mouth. Although in the example three layers are shown, in other examples a facing precursor may have less or further layers. In the example a first layer 35 may have a color which generally corresponds to a typical color of human dentin. The first layer 35 may be generally opaque. Therefore the first layer 35 (covering the framework in the finished dental restoration) may provide a base color of the dental restoration and may make the color of the framework generally invisible from outside the dental restoration. As an advantage the framework color may thus be selected independent from the desired color of the dental restoration. This may also enable, for example, the use of metal for the framework because the color of the metal may be covered and made generally invisible by the first layer 35. A second layer 36 and a third layer 37 may cover the first layer 35 and may be generally translucent. The generally translucent second and third layers 36, 37 may in combination provide the dental restoration with an individual color which fits with other teeth in a patient's mouth. The second and third layers 36, 37 may be slightly differently colored and thus may provide for a color transition from an outside toward an inside of the dental restoration. Therefore the second and third layers 36, 37 may provide the dental restoration with an optical appearance which resembles a human tooth.

The shape of the framework, the facing, and the dental restoration (or precursors thereof) may be determined using a CAD system. Thereby three-dimensional representations (for example in the form of digital surface data) of the framework, the facing, and the dental restoration may be generated. Further one or more three-dimensional representations of a patient's natural tooth or teeth may be used in generating representations of the framework, the facing, and the dental restoration. For example the shape of a tooth to be restored may be captured in a patient's mouth, and based on the captured shape of the natural tooth a user may design an appropriate dental restoration. Typically besides the tooth or teeth to be restored further teeth in the patient's mouth may be captured. In particular the shape of teeth adjacent or opposite the tooth or teeth to be restored may be captured and used in the design of the dental restoration. This may allow for providing a dental restoration which cooperates appropriately with the adjacent teeth. The skilled person will recognize several possibilities of capturing the shape of a patient's tooth or teeth. For example the patient's teeth may be intra-orally scanned using an optical scanner. Further a dental impression may be taken from the patient's teeth which may be scanned, or from which a plaster model is obtained that may be scanned. The skilled person will further recognize several ways of designing the dental restoration and individual parts or precursors thereof. The skilled person may for example use a dental CAD system as it is available under the designation LAVA™ Scan ST Design System from 3M ESPE AG, Germany. Thus the skilled person will be able to provide the shapes of the framework the facing, and the dental restoration (or precursors thereof) in the form of digital data, and such digital data may be used to manufacture the framework the facing, and the dental restoration (or precursors thereof) in a physical form.

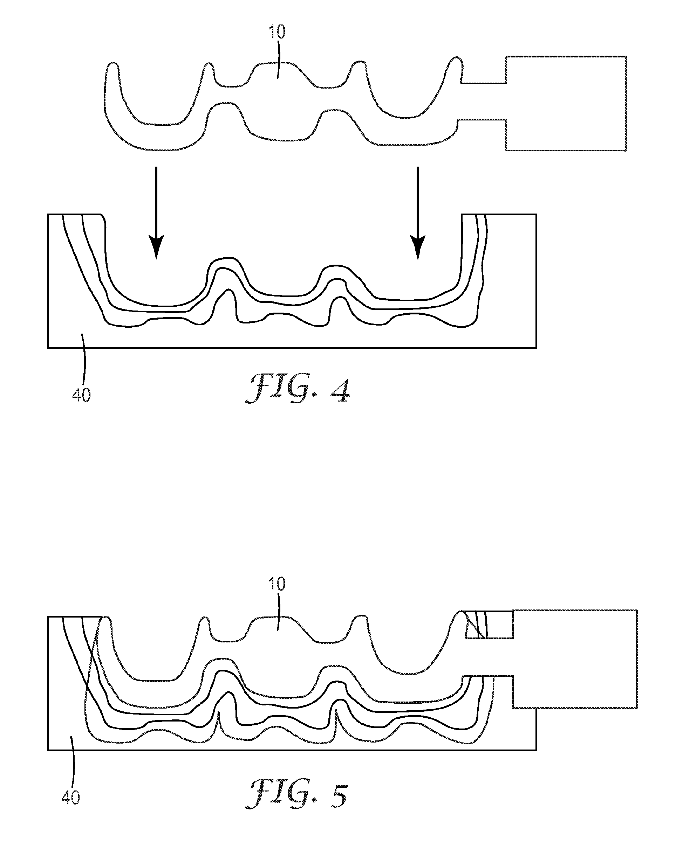

Fig. 4 illustrates an example of combining the framework precursor 10 and a facing precursor 40. The facing precursor 40 may correspond to a facing precursor as illustrated in Fig. 3 or a facing precursor as shown in Fig. 2. In the example shown the framework precursor 10 and the facing precursor 40 are assembled with one another. Preferably a connection layer is arranged between the framework precursor 10 and the facing precursor 40 for bonding both parts to one another. The connection layer may be formed by the steps of providing glass ceramic and/or ceramic particles in a liquid to form a slurry, and applying the slurry to at least one of the framework precursor 10 and the facing precursor 40. The assembly of the framework precursor 10 and the facing precursor 40 may be sintered. The sintering preferably exposes the assembly of the framework precursor 10 and the facing precursor 40 to heat. During sintering at an early stage the liquid of the slurry is preferably caused to evaporate from the heat. Thereby the facing precursor, in case it has an open-porous or open-celled material structure, preferably enables the vapor to escape through the open cells of the material. Thus undesired bubbles or voids in the connection layer and thus in the dental restoration may be generally avoided. Further heating may cause the glass ceramic particles of the facing precursor to further fuse, and thereby may cause the open-celled material to increase in density (or to reduce in porosity). In addition the facing precursor 40 and the framework precursor 10 may fuse via the connection layer. The ceramic material, the glass ceramic material, and the sinter temperature may be selected such that the glass ceramic material softens through the heat, but with the ceramic material maintaining substantially constant in shape. For example the glass ceramic material may have a lower softening point than the ceramic material and the sinter temperature may be selected between the softening temperature of the glass ceramic material and the softening temperature ceramic material.

In another example (not shown), both the framework precursor and the facing precursor may have an open-celled material structure and may be combined with a connection layer. The sinter temperature may be selected above the highest softening temperature of the glass ceramic and the ceramic material. Thereby the framework precursor and the facing precursor may be fused with one another.

In a further example (not shown) the framework precursor may be overmolded by a glass ceramic melt. Overmolding may be repeated to provide a multilayer facing precursor on the framework precursor. Different glass ceramic melts comprising glass ceramic of different colors may be provided to create a multilayer multicolor facing precursor. A multilayer multicolor facing (obtained from the multilayer multicolor facing precursor) may well resemble the appearance of a natural tooth.

In still a further example (not shown) a framework precursor is provided, and glass ceramic particles are adjoined to the framework precursor. For example the framework precursor may be provided with a layer of glass ceramic particles. The glass ceramic particles may be adjoined to the framework precursor by use of a binder, for example a thermoplastic binder, a wax or a polymer resin. For example the ceramic particles may be pre-coated with a thermoplastic connection layer and the particles may be adjoined to the framework precursor by applying heat to the particles. Further particle layers may be applied to previous particles layers by the same or similar method steps to provide the facing precursor. Different colorants may be provided for different particle layers so that a multilayer multicolor facing precursor may be formed. A multilayer multicolor facing (obtained from the multilayer multicolor facing precursor) may well resemble the appearance of a natural tooth.

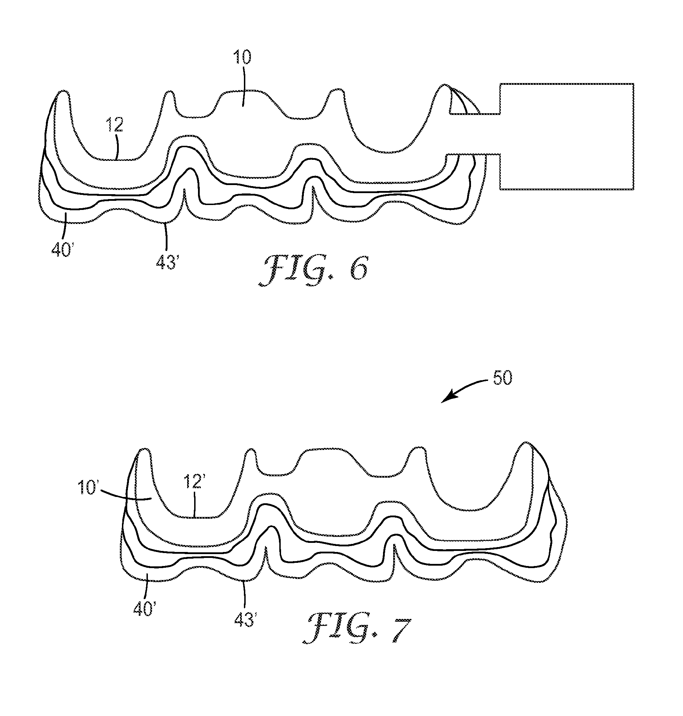

Fig. 5 shows the assembly of the framework precursor 10 and the facing precursor 40. The assembly may be positioned in a machine, for example a grinding or milling machine, in which the assembly may be further processed as illustrated in Fig. 6.

Fig. 6 shows an assembly comprising the framework precursor 10 and a facing 40'. The facing 40' is shown at a stage where material is removed from the outer shape of the dental restoration precursor 40 (shown in Fig. 5). The facing 40' has an outer shape 43' which corresponds to the final outer shape of the dental restoration, whereas the framework precursor 10 has an inner shape 12 which is preliminary relative to the final inner shape of the dental restoration. At the stage of completion of the dental restoration shown no further sintering steps may be required. Thus the shape of the assembly may generally not alter any more due to deformations resulting from any heat treatment. The outer shape 43' may therefore correspond relatively precisely to the desired outer shape of the dental restoration (as for example created in the CAD system). The outer shape 43' may therefore be used as a reference shape to finish the inner shape of the dental restoration in relative precise positional relation to the outer shape 43' as illustrated in Fig. 7.

The skilled person will recognize that alternatively the inner shape of the dental restoration may be finished first and based thereon the outer shape of the dental restoration may be shaped.

Fig. 7 shows a dental restoration 50 which comprises the framework 10' and the facing 40'. The framework 10' has an inner shape 12' which corresponds to the final inner shape of the dental restoration. Further the facing 40' has the outer shape 43' as described. The inner shape 12' is preferably shaped to fit with the shape of a natural tooth in a patient's mouth on which the dental restoration 50 is to be received. Optionally the inner shape 12' is shaped to account for a bonding material to be arranged between the receiving tooth or teeth and the dental restoration. The bonding material may provide for bonding the dental restoration and the tooth or teeth with one another. The natural tooth may be prepared, for example ground in shape, to receive the dental restoration. Therefore the natural tooth may form a tooth stump that is adapted to receive the dental restoration. Alternatively instead of a tooth stump a dental abutment may be present in a patient's mouth.

Such a dental abutment may be connected to a dental implant which is anchored in the patient's mouth, for example.

## Claims

1. A method of making a dental restoration comprising the steps of:
- providing a dimensionally predetermined framework or framework precursor;
- providing a dimensionally predetermined facing precursor;
- providing a dental restoration precursor from the framework/framework precursor and the facing precursor; and
- removing part of the dental restoration precursor to form the dental restoration.

2. The method of claim 1, further comprising the steps of providing data defining an outer shape of the dental restoration and providing data defining an outer shape of the dental restoration precursor, wherein the outer shape of the dental restoration precursor is oversized relative to the outer shape of the dental restoration.

3. The method of any of the preceding claims, wherein the step of providing the framework precursor comprises the steps of
- providing ceramic particles, and
- adjoining the ceramic particles such that they form an open-celled ceramic body;
and wherein the step of providing the facing precursor comprises the steps of
- providing glass ceramic particles, and
- adjoining the glass ceramic particles such that they form an open-celled glass ceramic body.

4. The method of claim 3, wherein the step of providing the framework precursor comprises the step of shaping the ceramic body by removing a portion of the ceramic body.

5. The method of claim 3 or 4, wherein the step of providing the facing precursor further comprises the step of shaping the glass ceramic body by removing a portion of the ceramic body.

6. The method of any of the claims 3 to 5, wherein the step of providing the framework precursor comprises the step of sintering the open-celled ceramic body toward the density of the ceramic particles.

7. The method of any of the claims 3 to 6, wherein the step of providing the facing precursor comprises the step of sintering the open-celled glass ceramic body toward the density of the glass ceramic particles.

8. The method of any of the claims 3 to 6, wherein the step of providing the dental restoration precursor comprises the step of sintering the open-celled glass ceramic body toward the density of the glass ceramic particles.

9. The method of any of the preceding claims, wherein the step of providing the dental restoration precursor comprises the step of joining the framework precursor and the facing precursor.

10. The method of any of the preceding claims, comprising the steps of
- providing the dental restoration precursor with a holder portion; and
- using the holder portion to position the dental restoration precursor in a machine for making the dental restoration from the dental restoration precursor.

11. The method of any of the preceding claims, further comprising the steps of providing a connection layer between the framework precursor and the facing precursor.

12. The method of any of the preceding claims, wherein the step of removing part of the dental restoration precursor comprises at least one of milling and grinding.

13. The method of any of the preceding claims, further comprising the step of providing data defining an inner shape of the dental restoration, wherein the inner shape is configured for mating with an outer shape of a natural tooth or an abutment for receiving the dental restoration.

14. The method of claim 13, wherein the step of removing part of the dental restoration precursor comprises the step of first providing the dental restoration precursor with the either the outer or the inner shape and subsequently with the inner or outer shape, respectively, whereby the shape provided first is used as a geometric reference for providing the shape provided subsequently.

15. The method of claim 14, further comprising the steps of:
- capturing at least part of the shape provided first to provide a three-dimensional computer representation of that shape; and
- digitally aligning the inner or outer shape based on the three-dimensional computer representation.
